Europäisches Patentamt

European Patent Office

Office européen des brevets

(19)

(11) Numéro de publication: **0 043 329**
**B1**

(12) **FASCICULE DE BREVET EUROPEEN**

(45) Date de publication du fascicule du brevet: **21.12.83**

(51) Int. Cl.³: **H 05 B 7/02,** G 01 K 17/10

(21) Numéro de dépôt: **81401047.6**

(22) Date de dépôt: **30.06.81**

(54) **Four électrique à arcs à fonctionnement contrôlé.**

(30) Priorité: **01.07.80 FR 8014639**

(43) Date de publication de la demande:
**06.01.82 Bulletin 82/1**

(45) Mention de la délivrance du brevet:
**21.12.83 Bulletin 83/51**

(84) Etats contractants désignés:
**BE DE FR GB IT LU NL SE**

(56) Documents cités:
**FR - A - 2 145 367**
**US - A - 3 487 685**
**US - A - 3 527 097**
**US - A - 3 743 752**

(73) Titulaire: **CLESID S.A.**
**51 rue Sibert**
**F-42403 Saint-Chamond (FR)**

(72) Inventeur: **Davene, Jean**
**26 rue Bel Air**
**F-42390 Villars (FR)**

(74) Mandataire: **Dupuy, Louis et al,**
**CREUSOT-LOIRE 15 rue Pasquier**
**F-75383 Paris Cedex 8 (FR)**

Courier Press, Leamington Spa, England.

Pour électrique à arcs à fonctionnement contrôlé

La présente invention se rapporte aux fours électriques à arcs, du type à parois latérales métalliques et à voûte au moins partiellement métallique et munis de dispositifs de détection de rayonnement destinés à leur commande, par exemple automatique ou semi-automatique.

Un four à arcs de ce type est en général constitué par une sole en matériau réfractaire de forte épaisseur, par des parois latérales métalliques à circulation d'eau d'épaisseur plus faible, et par une voûte métallique refroidie par circulation d'eau dont la partie centrale entourant les électrodes est toutefois en matériau réfractaire de forte épaisseur.

Il est maintenant courant, avec les fours de modèle déjà ancien construits entièrement en matériau réfractaire, de réaliser la conduite du four à partir de relévés thermiques statistiques obtenus à l'aide d'enregistrements réalisés à l'aide de détecteurs de rayonnement, ou capteurs, placés sur la paroi réfractaire du four, au dessus du niveau maximal d'acier liquide dans celui-ci. Ces types de capteurs, dits "sondes de paroi" n'apportent d'ailleurs pas de solution industrielle satisfaisante car ils sont d'un entretien et d'un fonctionnement difficiles. Pour de tels fours, il n'était pas pensable de placer ces détecteurs dans la voûte car celle-ci, construite en briques réfractaires soumises à une usure permanente, ne constitue pas un support suffisamment rigide et invariable pour recevoir de tels capteurs.

Dans le cas des fours modernes comportant des parois latérales métalliques refroidies par circulation d'eau et une voûte partiellement métallique également refroidie par circulation d'eau, on a bien évidemment essayé, comme auparavant, de placer des capteurs de flux thermique à l'intrados des parois latérales métalliques. Ce mode de réalisation se heurte toutefois à quelques difficultés. D'une part en effet ces capteurs, ce qui était d'ailleurs également le cas autrefois pour les sondes de parois réfractaires, se recouvrent rapidement d'une épaisseur de scories formant autogarnissage, ce qui diminue leur sensibilité, d'autre part, en raison en particulier de la "marche d'escalier" formée à la jonction de la paroi latérale et de la sole en raison de leur différence d'épaisseurs, il se forme sur les bords du four un talus de ferrailles non fondues assez important qui arrive à recouvrir pratiquement une telle hauteur de paroi que les sondes de paroi s'en trouvent recouvertes et ne fournissent alors pas une information exacte et immédiate sur l'état thermique du four.

Le four à arc à parois latérales métalliques et à voûte au moins partiellement métallique de l'invention ne présente pas ces inconvénients, étant équipé, de détecteurs de rayonnement efficaces, industriellement viables, et n'accrochant pratiquement pas les scories. Il est caractérisé en ce qu'il est équipé de capteurs de flux thermique fixés à l'intrados de la voûte et sur sa partie métallique, en ce que chacun desdits capteurs présente une partie extrême saillante par rapport à la surface interne de la partie métallique de la voûte, et en ce que leur surface d'extrémité dirigée vers l'intérieur du four est une surface de forme concave.

Avantageusement par ailleurs, ces capteurs sont des capteurs différentiels à circulation de liquide ce qui, comme il sera explicité ci-dessous, permet encore mieux d'éviter l'accrochage des scories.

L'invention sera explicitée plus en détails à l'aide de la description suivante de quelques exemples non limitatifs de réalisation, en référence aux dessins annexés dans lesquels:

la figure 1 est une vue de dessus très schématique du four électrique à arcs de l'invention,

la figure 2 est une coupe schématique selon la direction AA de la figure 1,

la figure 3 est un détail agrandi de la figure 2 représentant un premier type de capteur de flux thermique utilisable,

la figure 4 est une vue en coupe selon la direction aa de la figure 3,

la figure 5 est une vue en coupe d'un second type de capteur utilisable.

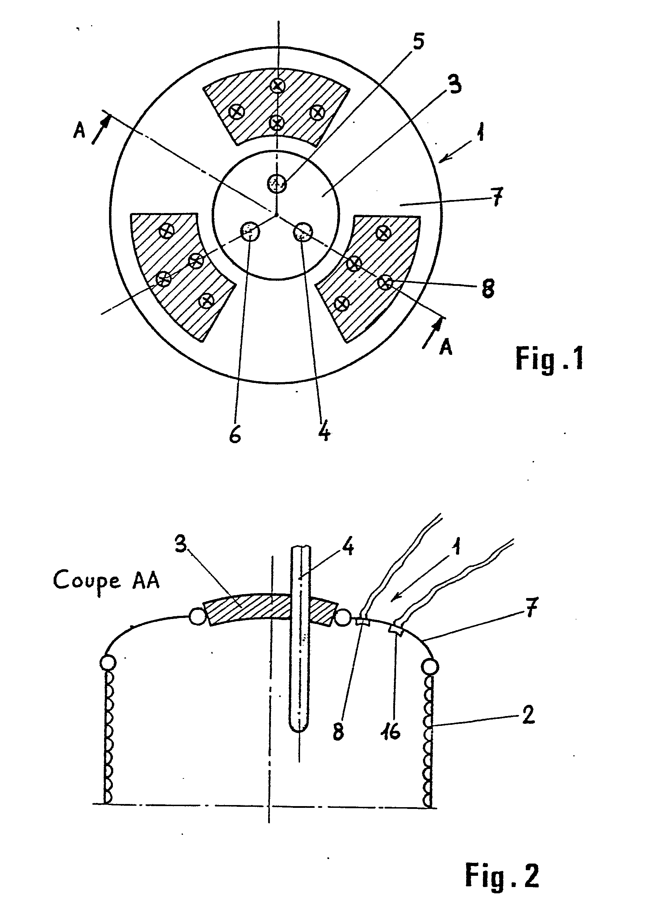

En se reportant tout d'abord aux figures 1 et 2, la référence 1 désigne la voûte du four, qui est dans l'exemple considéré telle que décrite dans la demande de brevet français de la demanderesse n° 80—03924, et la référence 2 la paroi latérale métallique refroidie par circulation d'eau ayant, dans l'exemple considéré, une structure telle que décrite dans la demande de brevet français n° 79—00131 de la demanderesse.

La voûte 1 est composée d'une part d'une partie centrale 3 en matériau réfractaire laissant toutefois un passage pour les électrodes (4, 5, 6), et d'autre part d'une partie périphérique annulaire 7 métallique et refroidie par circulation d'eau. Conformément à l'invention, des capteurs 8 de flux thermique sont disposés à l'intrados de la partie métallique 7 de la voûte 1. Comme on le distingue par ailleurs sur la figure 2, ils sont saillants vers l'intérieur du four par rapport à la surface de la partie métallique de la voûte et par ailleurs leur face extrême 16 regardant vers la sole est à surface concave. Ces deux dernières dispositions permettent d'éviter, sur ladite face extrême 16, la formation d'une couche solide du au dépôt des scories, tout en ne gênant pas la formation d'une telle couche d'autogarnissage sur le reste de la surface de l'intrados de la voûte. En effet, grâce à ces dispositions et en raison des chocs thermiques se produisant nécessairement lors de la marche du four, la fine couche de scories qui tend à se former sur ladite face extrême 16 est immédiatement craquelée et retombe alors vers l'intérieur du four sans entrainer, grâce au caractère saillant du capteur, la couche voisine formée sur la surface de l'intrados de la voûte.

Comme on le voit sur la figure 1, on placera avantageusement les capteurs 8 dans les zones hachurées situées au voisinage de chacun des trois axes à 120 degrés du trèfle formé par les trois électrodes (4, 5, 6). On mettra de préférence plusieurs capteurs dans chaque zone ce qui permet d'effectuer une analyse plus pertinente des signaux reçus et d'en tirer par suite de meilleures déductions pour la conduite de la marche du four, que ce soit pendant les phases de fusion ou pendant les phases d'élaboration qui leur font suite avant la coulée. Par ailleurs, l'accrochage des capteurs 8 sous la voûte, rendu industriellement possible par l'utilisation d'une voûte partiellement métallique, permet d'éviter l'obstruction des capteurs par la ferraille et permet d'une manière générale une meilleure analyse du rayonnement dans la partie intérieure du four.

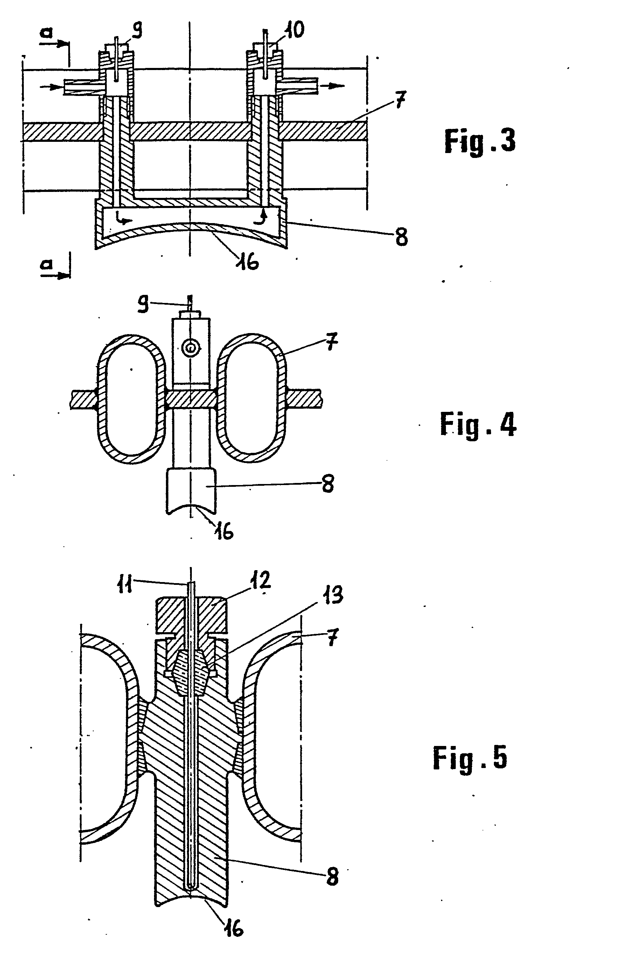

On a représenté sur les figures 3 et 4 un premier type de capteur de flux thermique utilisable, à titre d'exemple, pour le dispositif de l'invention. Un tel capteur est constitué par une boite métallique à l'intérieur de laquelle circule un courant d'eau sous relativement faible débit, de l'ordre de quelques litres par minute pour fixer les idées, comme indiqué par les flèches sur la figure 3. Deux thermocouples (9, 10) mesurent la température de l'eau respectivement à l'entrée et à la sortie du capteur 8: la différence entre ces deux températures est alors représentative du flux de chaleur reçu par le capteur 8. La concavité de la face extrême 16 du capteur a été dans l'exemple considérée créée aussi bien dans le sens longitudinal que dans le sens transversal. Il va de soi que la surface 16 pourrait être concave également uniquement dans l'un ou l'autre sens. Ce type de capteur thermique a pour avantage d'encore mieux faciliter le décrochage des scories de la face extrême 16, en raison du choc thermique supplémentaire dû aux différences de température entretenues sur la face 16 par la circulation de l'eau dans le capteur.

On a représenté sur la figure 5 un autre type de capteur thermique 8 utilisable pour l'invention, éventuellement en compagnie de capteurs de type précédent. Celui-ci est constitué par une pièce métallique cylindrique rendue solidaire de la partie métallique 7 de la voûte et dont on mesure les variations de température à l'aide d'un thermocouple 11 s'enfichant dans ladite pièce par des moyens classiques de soutien constitués par un bouchon vissé 12 et une olive de maintien 13.

La pièce étant cylindrique, sa face extrême 16 a, conformément à l'invention, la forme qu'aurait un miroir circulaire concave.

## Revendications

1. Four électrique à arcs, à parois latérales métalliques et à voûte au moins partiellement métallique, caractérisé en ce qu'il est équipé de capteurs de flux thermique (8) fixés à l'intrados de la voûte (1) et sur sa partie métallique (7), en ce que chacun desdits capteurs présente une partie extrême saillante par rapport à la surface interne de la partie métallique de la voûte et en ce que leur surface d'extrémité (16) dirigée vers l'intérieur du four est une surface de forme concave.

2. Four électrique à arcs selon la revendication 1, caractérisé en ce qu'au moins une partie desdits capteurs sont constitués par des capteurs différentiels à circulation de liquide (figures 3 et 4).

## Patentansprüche

1. Lichtbogenofen mit Metall-Seitenwänden und einem Deckengewölbe mindestens teilweise aus Metall, dadurch gekennzeichnet, daß er Wärmeflußmeßfühler (8) aufweist, welche an der Leibung des Deckengewölbes (1) und an dessen Metallteil (7) befestigt sind, daß jeder dieser Meßfühler einen zur Innenfläche des Deckengewölbe-Metallteils vorspringenden Endteil aufweist, und daß deren nach innen in den Ofen gerichtete Endfläche (16) eine konkave Fläche ist.

2. Lichtbogenofen nach Anspruch 1, dadurch gekennzeichnet, daß mindestens ein Teil dieser Meßfühler Differential-Flüssigkeitsmeßfühler sind (Abb. 3 und 4).

## Claims

1. Electric arc furnace with metal side walls and with an at least partially metal dome, characterised in that it is equipped with heat flux sensors (8) fixed to the intrados of the dome (1) and to its metal part (7), in that each of the said sensors has an end part projecting relative to the internal surface of the metal part of the dome, and in that their end surface (16) directed towards the inside of the furnace is a surface of concave shape.

2. Electric arc furnace according to Claim 1, characterised in that at least some of the said sensors consist of differential sensors with liquid circulation (Figures 3 and 4).

**Fig.1**

Coupe AA

**Fig.2**

**Fig. 3**

**Fig. 4**

**Fig. 5**